# FASCICULE DE BREVET EUROPEEN

(11) **EP 2 187 273 B1**
(45) Date de publication et mention de la délivrance du brevet: **15.06.2011**
(21) Numéro de dépôt: 08020064.5
(22) Date de dépôt: 18.11.2008
(51) Int. Cl.: G04D 3/00

(54) **Usinage de pièces avec une seule opération de serrage**
Bearbeitung von Werkstücken mit einem einzigen Klemmvorgang
Machining of parts with a single tightening operation

(43) Date de publication de la demande: 19.05.2010
(73) Titulaire: Almac S.A., 2300 La Chaux-de-Fonds (CH)
(72) Inventeur: Cassotti, Lucien, 2300 La Chaux-de-Fonds (CH); Gutknecht, Roland, 2046 Fontaines (CH)
(74) Mandataire: BOVARD AG

(56) Documents cités:
- EP-A- 1 918 066
- CH-A- 357 942
- CH-A- 409 584
- US-A- 5 253 880

## Description

La présente invention se rapporte au domaine technique général de l'usinage de pièces, et plus particulièrement, mais non exclusivement, au domaine technique de l'usinage d'une platine à partir d'une pièce brute telle qu'une plaquette.

Par usinage on désigne un processus général qui peut comprendre toute sorte d'usinage, tel que le meulage, le fraisage, le tournage ou le perçage, par exemple, seul ou en combinaison.

### Description de l'état de la technique

Historiquement, l'usinage des petites pièces, par exemple des petites rondelles comme les platines de montres, est effectué à partir d'une plaquette plus grande que la pièce désirée, et souvent d'une forme carrée, car cette forme est plus facile à manipuler et à orienter qu'une pièce ronde.

La plaquette carrée est typiquement fabriquée ayant des perçages ou des échancrures qui permettent un positionnement précis sur des goupilles saillantes d'un porte-pièce de la machine-outil.

L'usinage de la platine se déroule par exemple en deux stades successifs : usinage d'une partie de la plaquette, et le découpage de la partie dans la plaquette.

Dans le premier stade, la plaquette vierge est positionnée sur un porte-pièce. Une fois positionnée et serrée en position, la plaquette (ou au moins la partie d'intérêt) est usinée par fraisage, meulage, perçage ou tournage, par exemple, avec des outils connus. Le porte-pièce est adapté spécialement pour maintenir la forme particulière de la plaquette.

Le deuxième stade est le découpage de la platine dans la plaquette. La plaquette est transférée à un deuxième porte-pièce, adapté à maintenir la partie à découper de la plaquette (c'est-à-dire la pièce destinée à devenir la platine) sans perturber le découpage. Le découpage même est effectué par un processus de coupe approprié, comme connu de l'art ; de fraisage, tournage, sciage, ou de coupage par laser, par exemple. Le reste de la plaquette (c'est-à-dire la partie non-utile) tombe de la zone d'usinage ou est enlevée mécaniquement, dès la fin du découpage.

Un processus de finissage ultérieur est normalement aussi nécessaire, par exemple pour affiler les arêtes grossières du découpage.

Finalement, la platine usinée est enlevée du porte-pièce.

Ces procédés connus possèdent l'inconvénient qu'ils nécessitent deux posages et deux étapes distinctes avec un déplacement de la plaquette entre les deux posages, ce qui apporte une augmentation importante du temps d'usinage.

Un autre inconvénient des procédés de l'état de la technique est que le déplacement de la plaquette pendant l'usinage (entre les premier et deuxième portes-pièce par exemple) admet une imprécision importante de positionnement pour l'usinage des pièces à très haute précision.

Un autre inconvénient est la difficulté de tenir et/ou enlever la partie restante de la plaquette pendant l'étape de découpage. Dans les systèmes connus, cette partie restante n'est pas supportée et peut tomber du porte-pièce dès qu'elle se détache de la partie supportée (la platine usinée). Cette pièce restante, libre et mobile dans les environs de la pièce usinée, peut bien l'abîmer. Un mécanisme pour enlever la pièce restante serait souhaitable, mais un tel mécanisme est pratiquement difficile à réaliser sans empêcher le mouvement de l'outil de découpage.

Un porte-piece selon la préambule de la revendication 1 et un procédé selon la préambule de la revendication 6 sont décrits dans EP 1918066.

Un objet que la présente invention vise par conséquent à proposer est un nouveau procédé d'usinage d'une pièce désirée (par exemple d'une platine de montre) à partir d'une pièce brute qui se déroule plus rapidement, qui élimine la nécessité de déplacer la plaquette d'un porte-pièce à un autre, et dans lequel la partie restante peut être enlevée sans abîmer la platine et sans nécessiter des mécanismes spéciaux.

Un autre objet de l'invention est un procédé d'usinage à haute précision.

Un autre objet que l'invention vise à proposer est un porte-pièce qui permet la réalisation de ce procédé, en permettant le positionnement de la plaquette brute et le positionnement, dès qu'elles se sont détachées par le découpage de la partie usinée et la partie restante.

### Exposé sommaire de l'invention

A cet effet, l'invention a pour objet un porte-pièce pour maintenir une pièce brute en position pendant un usinage dans une machine-outil et sous commande d'un logiciel de commande afin de produire une pièce désirée, la pièce brute comprenant une partie utile, étant la partie destinée à être usinée et puis découpée pour fournir la pièce désirée, et une partie restante, destinée à ne pas faire partie de la pièce désirée,
le porte-pièce comprenant :
- des moyens de montage et positionnement de la pièce brute, un des moyens de montage et positionnement, dit premier élément, disposé pour tenir en position la partie utile de la pièce brute, et un autre des moyens de montage et positionnement, dit second élément, disposé pour tenir en position la partie restante de la pièce brute,
- au moins un desdits premier et second éléments étant déplaçable sous commande dudit logiciel de commande, tel que, dès le découpage de la partie utile de la pièce brute, le premier élément peut être avancé relatif au second élément pour faciliter un finissage de la partie utile montée sur le premier élément.

L'invention a également pour objet un procédé de production d'une pièce désirée depuis une pièce brute, la pièce brute comprenant une partie utile, étant la partie de la pièce brute destinée à être usinée et puis découpée pour fournir la pièce désirée, et une partie restante, étant la partie de la pièce brute destinée à ne pas faire partie de la pièce désirée, le procédé étant réalisé sous commande d'un logiciel de commande dans une machine-outil comprenant un porte-pièce, le porte-pièce comprend un premier élément pour tenir la partie utile de la pièce brute, et un second élément pour tenir la partie restante de la pièce brute, lesdits premier et second éléments étant susceptibles d'être déplacés, relatifs l'un à l'autre, selon l'axe de rotation, et sous commande du logiciel de commande, le procédé comprenant les étapes suivantes :
- une première étape de positionnement de la pièce brute sur le porte-pièce,
- une seconde étape de serrage de la pièce brute en position sur le porte-pièce, en un serrant la partie restante au second élément du porte-pièce,
- une troisième étape d'usinage de la partie utile de la pièce brute, la troisième étape comprenant un découpage partiel de ladite partie utile dans la pièce brute, telle que la partie utile et la partie restante ne sont attachées que par des régions non-découpées, dites ponts, de la pièce brute,
- une quatrième étape de serrage de la partie utile au premier élément,
- une cinquième étape d'enlèvement des ponts, et ainsi de la désolidarisation des parties utiles et restantes,
- une sixième étape de l'enlèvement de la partie restante du porte-pièce,
- une septième étape de déplacement du premier élément du porte-pièce telle que la partie utile de la pièce brute s'éloigne du second élément, et
- une huitième étape d'usinage postérieure de la partie utile.

Quelques variantes de l'invention sont définies dans les revendications dépendantes ci-annexées.

### Description brève des dessins

L'invention et ses avantages seront mieux compris à la lecture de la description ci-après faite à titre d'exemple non limitatif, en référence aux figures annexées qui représentent :
- la figure 1, illustre un exemple d'une broche de tournage d'une machine-outil, avec un porte-pièce selon l'invention, et un moyen de positionnement d'une pièce à usiner sur le porte-pièce, prêt à exécuter la première étape d'un procédé selon l'invention.
- la figure 2, illustre une vue section du porte-pièce et le moyen du positionnement de la figure 1.
- la figure 3, illustre une vue orthographique du porte-pièce et du moyen de positionnement de la figure 1.
- la figure 4, illustre une vue orthographique du porte-pièce, un moyen de serrage et des moyens d'usinage pour l'exécution des seconde et troisième étapes d'un procédé selon l'invention.
- les figures 5 et 6, illustrent une vue orthographique d'une pièce montée sur le porte-pièce, et des moyens de positionnement et de serrage pour l'exécution de la quatrième étape d'un procédé selon l'invention.
- la figure 7, illustre une vue orthographique de l'enlèvement, dans la cinquième étape de procédé, des « ponts » restants après le décolletage partiel de la quatrième étape.
- la figure 8, illustre une vue orthographique de l'éloignement de la pièce restante (non-utile) du porte-pièce dans la sixième étape du procédé.
- la figure 9, illustre une vue section de figure 8.
- la figure 10, illustre une vue orthographique du déplacement en avant du premier élément du porte-pièce, selon la septième étape du procédé, afin de permettre un finissage de la pièce utile.
- la figure 11, illustre une vue orthographique d'un usinage selon la huitième étape du procédé.
- la figure 12, illustre une vue orthographique de l'enlèvement de la pièce usinée.
- la figure 13, illustre une vue orthographique de l'escamotage ultérieur du premier élément de porte-pièce et l'escamotage des goupilles dans le premier élément.

### Exposé détaillé de l'invention

Les éléments structurellement et fonctionnellement identiques et présents sur plusieurs figures distinctes, sont affectés d'une seule et même référence.

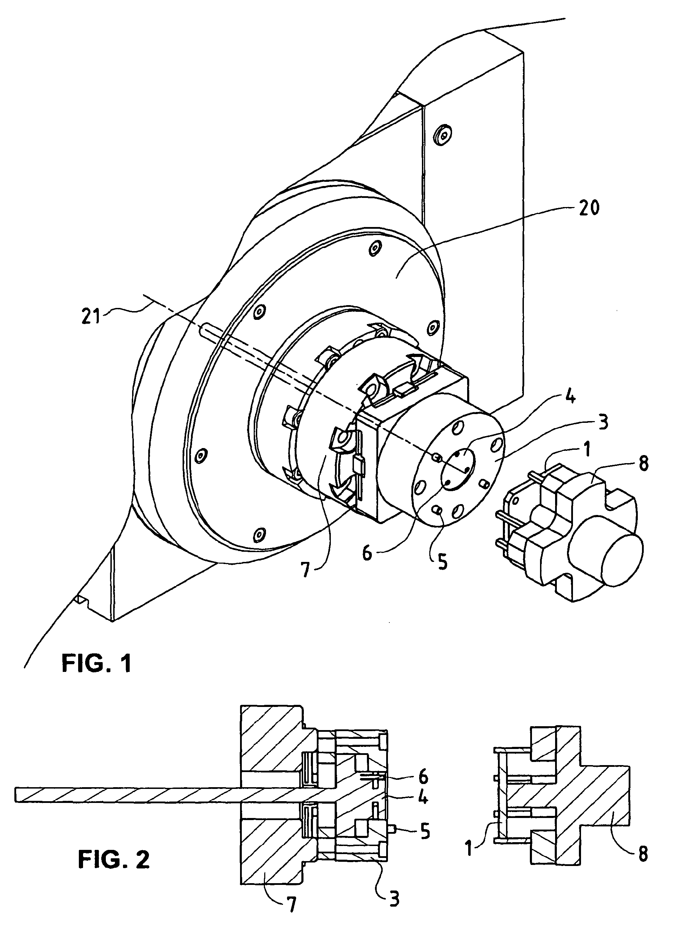

La figure 1 illustre la broche (20) d'une machine-outil équipée d'une porte-pièce (7) pour la réalisation de l'invention. La porte pièce comprend deux éléments (3, 4) pour le montage et positionnement de la pièce brute (1). Ces deux éléments forment un « diviseur », c'est-à-dire un ensemble de deux portes-pièces qui sera, après la séparation de la partie désirée depuis le reste de la pièce brute, utilisé pour manipuler les deux parties séparément.

Dans l'exemple représenté dans la figure 1, les deux éléments (3 et 4) sont ronds et coaxiaux avec l'axe (21) de rotation de la broche (20), mais ils pourraient être également de quelconques formes, et non-coaxial avec l'axe de rotation, ou même non-coaxial l'un à l'autre. La forme et la disposition des éléments dépendent de la forme de la pièce étant usinée et celle de la plaquette dont la pièce désirée est fabriquée.

La figure 1 illustre le déroulement de la première étape d'un procédé selon l'invention. La plaquette (1), qui est munie des perçages de positionnement, est apportée par le préhenseur (8), est posée à l'élément de montage extérieur (3) du porte-pièce (7). Cet élément (3) est muni des goupilles (5) de positionnement qui correspondent aux perçages de la plaquette (1). La surface de la partie intérieure du diviseur (l'élément 4) est à fleur de celle de la zone extérieure (l'élément 3). L'élément intérieur (4) est aussi muni des goupilles (6) de positionnement, mais ces goupilles (6) sont rétractables, et pendant cette première étape, sont rentrées à fleur de, ou sous, la surface de l'élément intérieur (4).

Cette disposition de goupilles et trous de positionnement n'est qu'une des nombreuses possibilités pour maintenir la plaquette étant usinée en position sur le porte-pièce (7). On pourrait également utiliser quelconques sortes de formes correspondantes qui peuvent servir à positionner précisément la pièce (1) sur la surface du porte-pièce (7).

La figure 2 illustre une vue section de la représentation de la figure 1. De cette figure on voit une partie du mécanisme pour avancer ou rétracter l'élément intérieur (4) relatif à l'élément extérieur (3). Bien que ces figures montrent un porte-pièce dans lequel la partie intérieure (4) est escamotable relative à la partie extérieure (3), il serait bien possible de les inverser telle que l'élément extérieur (3) est escamoté relative à l'élément intérieur (4), ou même d'équiper les deux avec des moyens d'escamotage relatif l'un à l'autre, ou au porte-pièce (7).

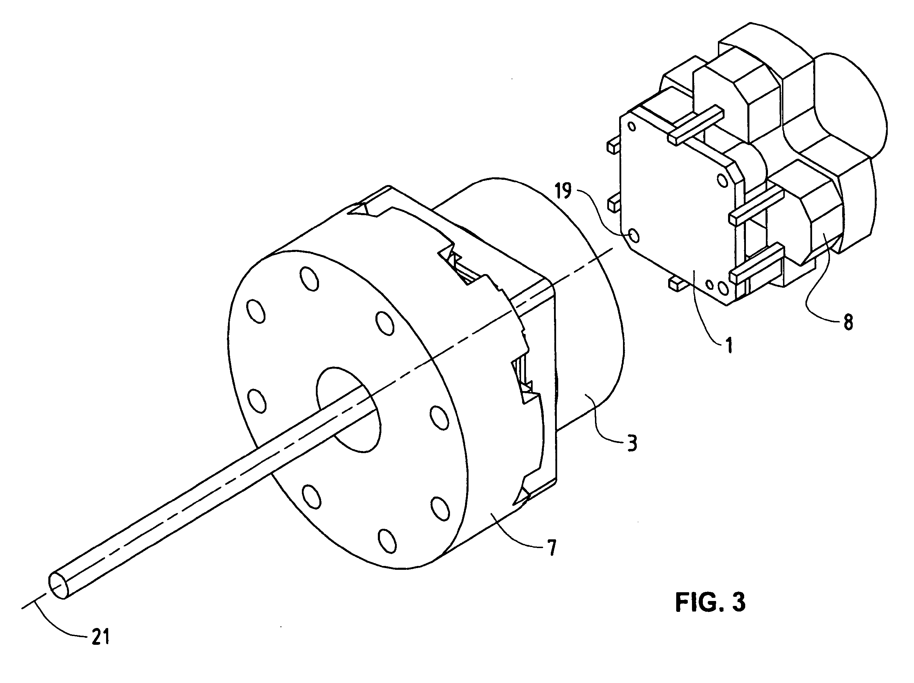

La figure 3 illustre une deuxième vue orthographique de la représentation des figures 1 et 2. De cette figure, on voit les perçages (19) de positionnement da la pièce brute (1) prêt à monter sur le porte-pièce (7, 3, 4).

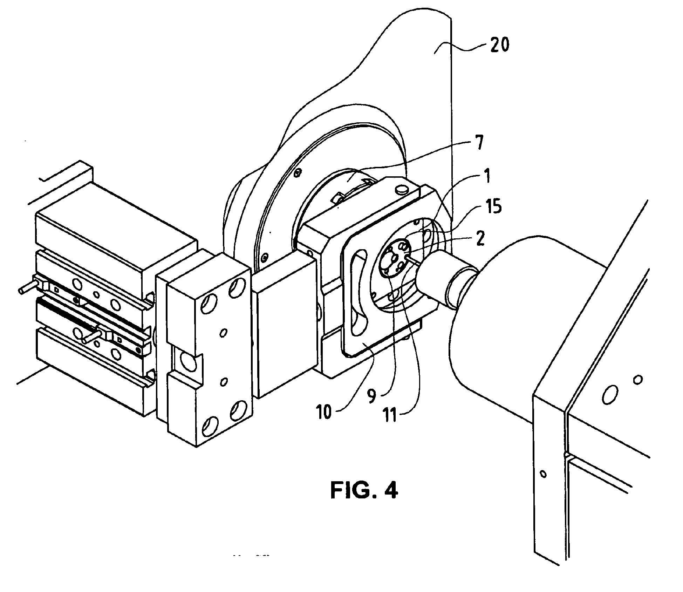

La figure 4 montre la deuxième étape du procédé. Dans cette deuxième étape, la pièce brute est serrée sur le porte-pièce (7) par un serre-flanc (10) escamotable dans un plan sensiblement orthogonal à l'axe (21) de rotation de la broche (20). Le serre-flanc (10) appuie sur la partie de la pièce brute (1) qui ne fait pas partie de la pièce désirée (appelée ici la partie restante) - la partie extérieure dans cet exemple - pour tenir la pièce brute (1) en position pendant l'usinage.

La figure 4 montre aussi l'usinage de la partie (appelée partie utile ici) de la pièce brute (1) destinée à devenir la pièce désirée. L'usinage peut comprendre toute sorte d'opérations d'usinage, telle que meulage, fraisage, perçage ou tournage, par exemple, seule ou en combinaison. Pendant cet usinage, un deuxième jeu de perçages (9) est usiné dans la partie utile, ce qui va aider ultérieurement à tenir la partie utile (2) en position sur le porte-pièce (7). L'usinage peut aussi comprendre un découpage partiel - une ébauche du contournagement pour faciliter et simplifier le découpage ultérieur de la partie utile (2) dans la pièce brute (1).

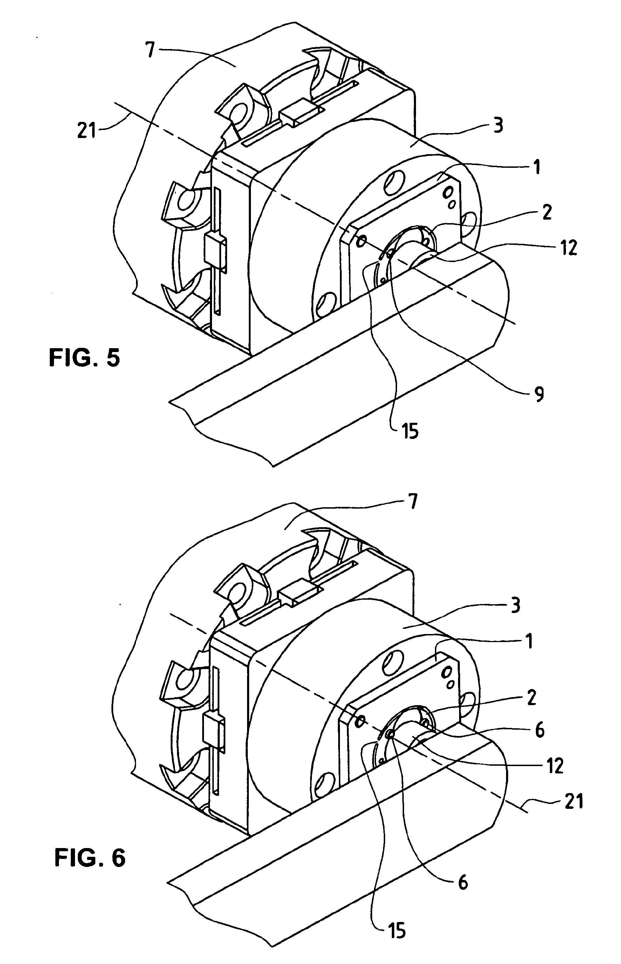

La figure 5 illustre la troisième étape du procédé - le serre-flanc (10) est rétracté, et puis un appui escamotable rotatif (12) est mis en place pour presser la partie utile (2) de la pièce brute (1) contre le porte-pièce (7, 4) pour la tenir en place pendant le découpage.

La figure 6 illustre la quatrième étape du procédé - l'élément intérieur (4) du porte-pièce (7) est avancé un peu pour presser contre l'appui (12), et les goupilles (6) de l'élément intérieur (4) sortent et s'allient dans les perçages (9) usinés dans la deuxième étape.

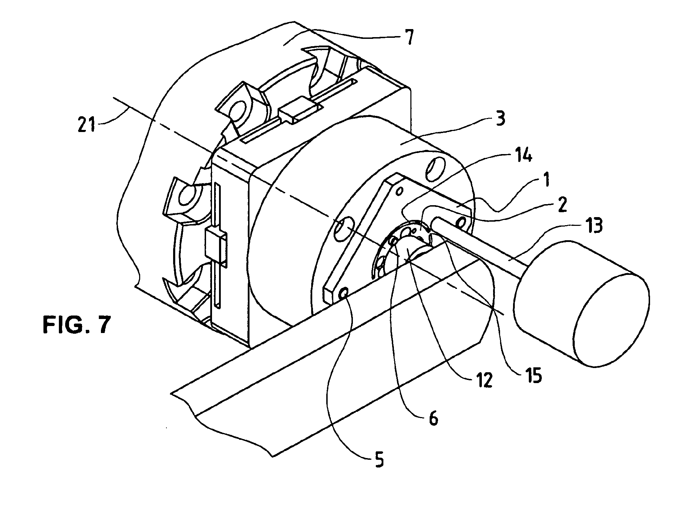

La figure 7 illustre la cinquième étape du procédé, dans laquelle les « ponts » (15) attachant la partie utile (2) à la partie restante de la pièce brute sont enlevés, par perçage, par exemple, ou par d'autres sortes d'usinage. La partie utile (2) est maintenant usinée et détachée de la reste de la pièce brute (1). La partie utile (2) est ainsi tenue au porte-pièce (7), plus précisément à l'élément intérieur escamotable (4) du porte-pièce (7) par l'appui (12) et les goupilles (6) de l'élément intérieur (4).

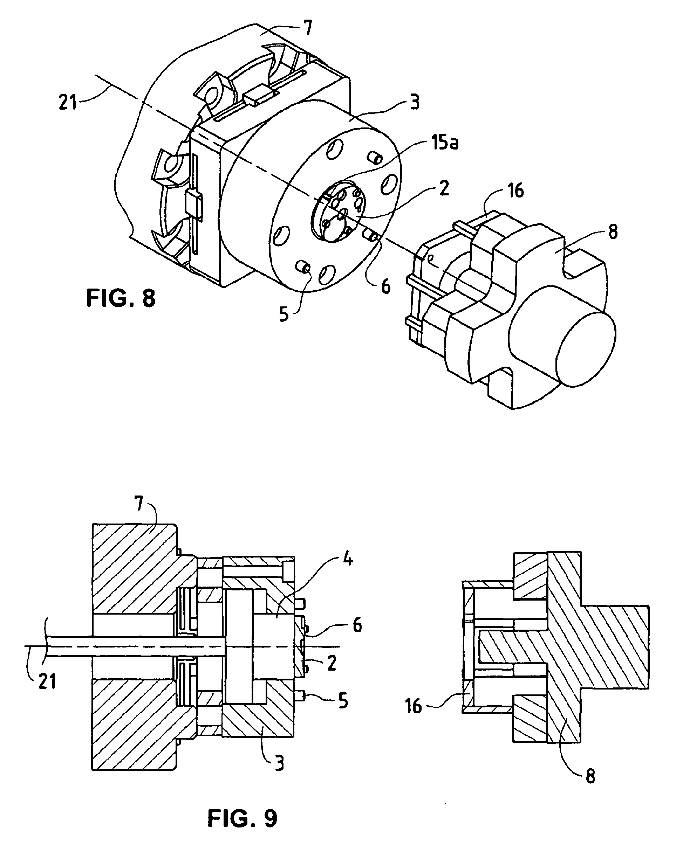

Les figures 8 à 10 illustrent la sixième étape du procédé - l'enlèvement de la partie restante (16) de la pièce brute (1), et la préparation de la partie utile (2) pour le finissage. Dans l'exemple montré, la partie restante (16) est enlevée par le préhenseur (8) déjà utilisé dans la première étape pour poser la pièce brute (1) sur le porte-pièce (7). De ces figures on voit aussi représentés les rugosités et les restes des « ponts » (15a) qui seront enlevés dans une opération de finissage. Dans cette étape, l'élément escamotable (4) du porte-pièce (7) est avancé, sailli de l'élément extérieur (3), pour permettre un usinage non-encombré par l'élément extérieur (3) et ses goupilles (6).

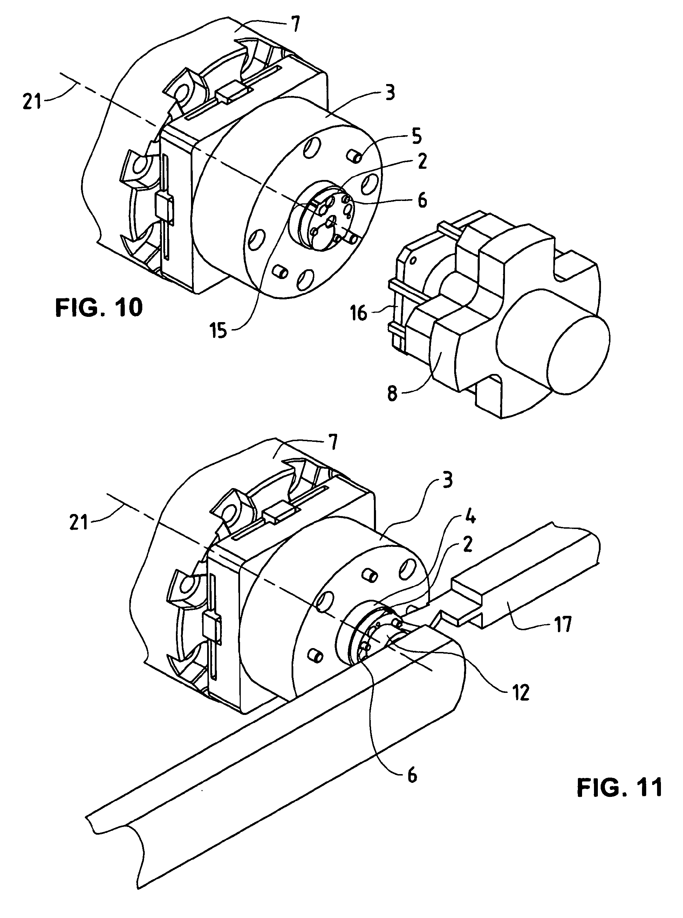

Le finissage, étant la huitième étape du procédé, est illustré dans la figure 11. La partie utile (2) de la pièce brute est toujours tenue en place par l'appui (12) et les goupilles (6). Dans l'exemple, le finissage est accompli, par tournage, avec un outil de finissage (17).

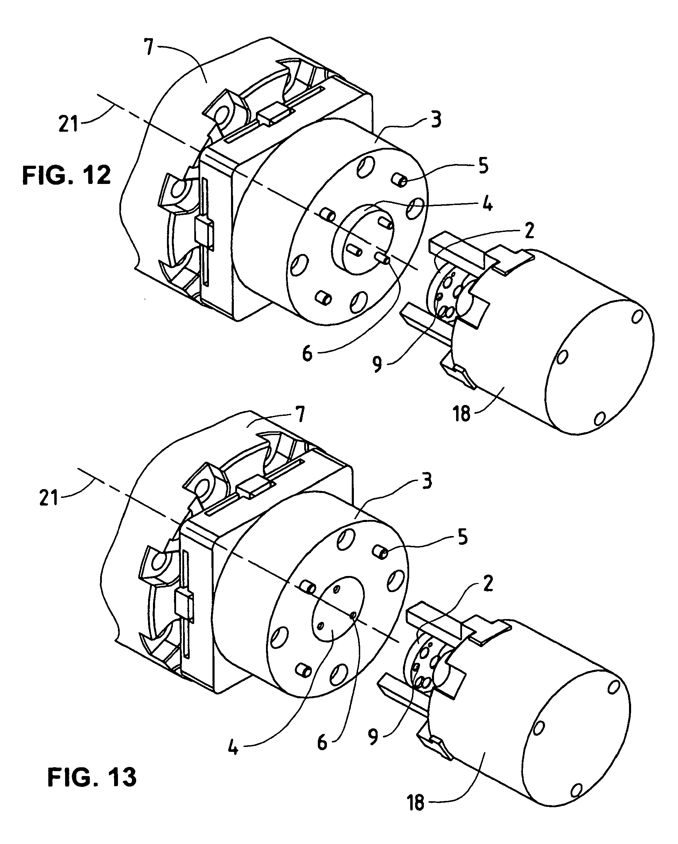

La figure 12 illustre l'enlèvement de la pièce usinée (2) depuis le porte-pièce (7, 4) par un préhenseur (18) approprié, et la figure 13 montre comment, après l'enlèvement de la pièce usinée (2), l'élément escamotable (4) du porte-pièce (7), et ses goupilles (6), sont rentrés en préparation pour le posage de la prochaine pièce brute à usiner.

Les étapes du procédé sont décrites en forme sommaire ci-après:

### Etape 1 :

Chargement de la barquette (1) sur les goupilles extérieures (5) du diviseur (3, 4) à l'aide du préhenseur (8).

Le poussoir intérieur (4) est à fleur de la zone d'appui (4), goupilles (6) rentrées.

### Etape 2 :

Le serre-flanc escamotable (10) vient maintenir la pièce brute (1).

Fraisage et perçage de la face de la pièce et ébauche du contournement.

La pièce usinée (2) n'est pas encore détachée.

### Etape 3 :

Retrait du serre-flanc (10) et mise en place d'un appui (12) escamotable rotatif qui presse la pièce usinée (2).

### Etape 4 :

Le poussoir (4) à l'intérieur du diviseur (3, 4) avance d'un cran.

Ce sont alors les goupilles (6) correspondants aux trous (9) de la platine (2) qui sortent.

Les goupilles (6) viennent tenir la platine (2) mais le poussoir (4) n'est toujours pas en fin de course.

L'appui (12) sur la face avant de la pièce usinée (2) est toujours en action.

### Etape 5 :

Avec l'appui (12) toujours en place, l'axe (21) du diviseur (3, 4) vient présenter consécutivement devant la broche (20) les deux points (15) qu'ils restent à usiner pour détacher la pièce (2).

### Etape 6 :

Le préhenseur (8) vient chercher le contour de la barquette (16) alors que la platine (2) reste sur ses goupilles.

### Etape 7 :

Le poussoir intérieur (4) vient en fin de course pour dégager la platine (2) plus loin que les goupilles (6) fixées sur le diviseur (3, 4).

### Etape 8 :

La pièce (2) est tournée (à l'aide de l'appui 12 dont l'extrémité est guidée en rotation).

### Etape 9 :

Le préhenseur 18 vient chercher la pièce finie (2).

Le poussoir intérieur (4) revient en position de départ, goupilles (6) rentrées.

## Revendications

1. Porte-pièce (7) pour maintenir une pièce brute (1) en position pendant un usinage dans une machine-outil et sous commande d'un logiciel de commande afin de produire une pièce désirée,
la pièce brute (1) comprenant une partie utile (2), étant la partie destinée à être usinée et puis découpée pour fournir la pièce désirée, et une partie restante (16), destinée à ne pas faire partie de la pièce désirée,
le porte-pièce comprenant des moyens (3, 4) de montage et positionnement de la pièce brute (1),
le porte-pièce (7) comprenant:
un des moyens de montage et positionnement, dit premier élément (4), disposé pour tenir en position la partie utile (2) de la pièce brute (1),
un autre des moyens de montage et positionnement, dit second élément (3), disposé pour tenir en position la partie restante (16) de la pièce brute (1), et le porte-piece étant **caractérisé en ce que**:
au moins un desdits premier et second éléments (3, 4) est déplaçable sous commande dudit logiciel de commande, tel que, dès le découpage de la partie utile (2) de la pièce brute (1), le premier élément (4) peut être avancé relatif au second élément (3) pour faciliter un finissage de la partie utile (2) montée sur le premier élément (4).

2. Porte-pièce (7) selon la revendication 1, dans lequel :
le premier élément (4) comprend des premiers moyens de piétage (6) pour engager à des seconds moyens inverses de piétage (9) de la partie utile (2) de la pièce brute (1).

3. Porte-pièce (2) selon la revendication 2, dans lequel :
lesdits premiers moyens de piétage (6) comprennent des premières goupilles saillantes du premier élément (4), et

4. Porte-pièce selon l'une des revendications 1 à 3, dans lequel
les premières goupilles sont escamotables entre une première position, dite position rétractée, où elles ne dépassent pas la première surface, et une seconde position, dite position saillie, où elles saillent du premier élément (4).

5. Porte-pièce selon l'une des revendications 1 à 4, dans lequel les premières goupilles comprennent des moyens de serrer la partie utile (2) au premier élément (4) du porte-pièce (7).

6. Procédé de production d'une pièce désirée depuis une pièce brute (1), la pièce brute (1) comprenant une partie utile (2), étant la partie de la pièce brute destinée à être usinée et puis découpée pour fournir la pièce désirée, et une partie restante (16), étant la partie de la pièce brute destinée à ne pas faire partie de la pièce désirée,
le procédé étant réalisé sous commande d'un logiciel de commande dans une machine-outil,
la machine-outil comprenant un porte-pièce (7),
le procédé comprenant une première étape de positionnement de pièce brute (1) sur le porte-pièce (7),
une seconde étape de serrage de la pièce brute (1) en position sur le porte-pièce (7),
une troisième étape d'usinage de la partie utile (2) de la pièce brute (1),
le serrage de ladite seconde étape étant un serrage de la partie restante (16) au second élément (3) du porte-pièce (7),
ladite troisième étape comprenant un découpage partiel de ladite partie utile dans la pièce brute (1), telle que la partie utile et la partie restante (16) ne sont attachées que par des régions non découpées (15), dites « ponts », de la pièce brute (1),
le procédé comprenant en outre:
une quatrième étape de serrage de la partie utile au premier élément (4),
une cinquième étape d'enlèvement des « ponts », et ainsi de la désolidarisation des parties utiles et restantes,
une sixième étape de l'enlèvement de la partie restante (16) du porte-pièce (7),
le procédé étant **caractérisé en ce que** :
le porte-pièce (7) comprend un premier élément (4) pour tenir la partie utile de la pièce brute (1), et un second élément (3) pour tenir la partie restante (16) de la pièce brute (1), lesdits premier et second éléments (4 et 3) étant susceptibles d'être déplacés, relatifs l'un à l'autre, selon l'axe de rotation, et sous commande du logiciel de commande, et **en ce que** le procédé comprend
une septième étape de déplacement du premier élément (4) du porte-pièce (7) telle que la partie utile de la pièce brute s'éloigne du second élément (3), et
une huitième étape d'usinage postérieur de la partie utile.

7. Procédé de production selon la revendication 6, dans lequel ledit premier élément (4) et ladite partie utile (2) de la pièce brute (1) comprennent un des moyens complémentaires de piétage (6, 9).

8. Procédé de production selon la revendication 7, dans lequel les moyens complémentaires de piétage du premier élément (4) comprennent des goupilles de positionnement, lesdites goupilles étant déplaçables entre une première disposition rétractée dans le premier élément (4) et une seconde disposition saillante du premier élément (4),
et dans lequel les moyens complémentaires de piétage de la partie utile (2) de la pièce brute (1) comprennent des perçages et/ou des échancrures pour un positionnement précis de la pièce utile sur le premier élément quand les goupilles saillent du premier élément.

9. Procédé de production selon la revendication 8, dans lequel la quatrième étape comprend un déplacement des goupilles entre la disposition rétractée et la disposition saillante, telle que la partie utile peut être tenue en position de la cinquième à la huitième étape.

10. Procédé de production selon la revendication 6, dans lequel la huitième étape comprend un usinage des arêtes de la première partie pour enlever quelconques rugosités (15a) engendrées pendant les troisième et/ou cinquième étapes.

## Claims

1. Workpiece holder (7) for holding a raw piece (1) in position during a machining in a machine tool and under control of a control software in order to produce a desired piece,
the raw piece (1) comprising a useful part (2), being the part intended to be machines and then cut out to provide the desired piece, and a remaining part (16), intended not to form part of the desired piece,
the workpiece holder comprising means (3, 4) of mounting and positioning of the raw piece (1),
the workpiece holder (7) comprising:
one of means of mounting and positioning, referred to as first element (4), disposed to hold in position the useful part (2) of the raw piece (1),
another means of mounting and positioning, referred to as second element (3), disposed to hold in position the remaining part (16) of the raw piece (1), and the workpiece holder being **characterised in that**
at least one of said first and second elements (3, 4) is displaceable under the control of said control software, such that, from the cutting out of the useful part (2) of the raw piece (1), the first element (4) can be advanced relative to the second element (3) to facilitate a finishing of the useful part (2) mounted on the first element (4).

2. Workpiece holder (7) according to claim 1, wherein :
the first element (4) comprises first locating means (locating studs) (6) to engage in second inverse locating means (locating holes) (9) of the useful part (2) of the raw piece (1).

3. Workpiece holder (7) according to claim 2, wherein:
the said first locating means (6) comprise first pins protruding from the first element (4).

4. Workpiece holder according to one of the claims 1 to 3, wherein
the first pins are retractable between a first position, referred to as retracted position, where they do not surpass the first surface, and a second position, referred to as projecting position, where they project from the first element (4).

5. Workpiece holder according to one of the claims 1 to 4, wherein the first pins comprise means of clamping the useful part (2) to the first element (4) of the workpiece holder (7).

6. Method of production of a desired piece from a raw piece (1), the raw piece (1) comprising a useful part (2), being the part of the raw piece intended to be machined and then cut out to provide the desired piece, and a remaining part (16), being the part of the raw piece intended not to form part of the desired piece,
the method being carried out under the control of a control software in a machine tool,
the machine tool comprising a workpiece holder (7),
the method comprising a first step of positioning of <the> raw piece (1) on the workpiece holder (7),
a second step of clamping of the raw piece (1) in position on the workpiece holder (7),
a third step of machining of the useful part (2) of the raw piece (1),
the clamping of the said second step being a clamping of the remaining part (16) to the second element (3) of the workpiece holder (7),
the said third step comprising a partial cutting out of the said useful part in the raw piece (1), such that the useful part and the remaining part (16) are attached only by regions not cut out (15), referred to as "bridges", of the raw piece (1),
the method further comprising:
a fourth step of clamping of the useful part to the first element (4),
a fifth step of removal of the "bridges", and thus of separating of the useful and remaining parts,
a sixth step of removal of the remaining part (16) from the workpiece holder (7),
the method being **characterised in that**:
the workpiece holder (7) comprises a first element (4) for holding the useful part of the raw piece (1), and a second element (3) for holding the remaining part (16) of the raw piece (1), the said first and second elements (4 and 3) being capable of being displaced, one relative to the other, along the axis of rotation, and under control of control software, and **in that** the method comprises
a seventh step of displacement of the first element (4) of the workpiece holder (7) such that the useful part of the raw piece moves away from the second element (3), and
an eighth step of subsequent machining of the useful part.

7. Production method according to claim 6, wherein the said first element (4) and the said useful part (2) of the raw piece (1) comprise one of the complementary locating means (locating stud/locating hole) (6, 9).

8. Production method according to claim 7, wherein the complementary locating means (locating stud/locating hole) of the first element (4) comprise positioning pins, the said pins being displaceable between a first arrangement retracted in the first element (4) and a second arrangement projecting from the first element (4),
and in which the complementary locating means (locating stud/locating hole) of the useful part (2) of the raw piece (1) comprise perforations and/or notches for a precise positioning of the useful piece on the the first element when the pins project from the first element.

9. Production method according to claim 8, wherein the fourth step comprises a displacement of the pins between the retracted arrangement and the projecting arrangement, such that the useful part can be held in position from the fifth to the eighth step.

10. Production method according to claim 6, wherein the eighth step comprises a machining of the edges of the first part to remove any rough areas (15a) caused during the third and/or fifth steps.

## Patentansprüche

1. Werkstückhalter (7) zum Halten eines Rohlings (1) in einer Position während einer maschinellen Bearbeitung in einer Werkzeugmaschine und unter der Steuerung einer Steuerungs-Software, um ein gewünschtes Stück (Werkstück) herzustellen,
wobei der Rohling (1) einen nutzbaren Teil aufweist, welcher maschinell bearbeitet und anschliessend ausgeschnitten werden soll, um das gewünschte Stück bereitzustellen, und einen verbleibenden Teil (16) aufweist, welcher nicht Teil des gewünschten Stücks sein soll,
wobei der Werkzeughalter Mittel (3, 4) zum Montieren und Positionieren des Rohlings (1) aufweist,
wobei der Werkzeughalter (7) aufweist:
eines der Mittel zum Montieren und Positionieren, welches als erstes Element (4) bezeichnet wird und dazu ausgelegt ist, um den nutzbaren Teil (2) des Rohlings (1) in einer Position zu halten,
ein weiteres der Mittel zum Montieren und Positionieren, welches als zweites Element (3) bezeichnet wird und dazu ausgelegt ist, um den verbleibenden Teil (16) des Rohlings (1) in einer Position zu halten, und wobei der Werkstückhalter **dadurch gekennzeichnet ist, dass**:
mindestens eines der ersten und zweiten Elemente (3, 4) unter der Steuerung der Steuerungs-Software derart verschiebbar ist, dass ab dem Ausschneiden des Rohlings (1) das erste Element (4) bezüglich des zweiten Elements (3) vorgeschoben werden kann, um eine Fertigstellung des auf dem ersten Element (4) montierten nutzbaren Teils (2) zu erleichtern.

2. Werkstückhalter (7) nach Anspruch 1, bei welchem:
das erste Element (4) erste Anordnungsmittel (6) aufweist, um mit zweiten umgekehrten Anordnungsmitteln (9) des nutzbaren Teils (2) des Rohlings (1) in Eingriff zu gelangen.

3. Werkstückhalter (7) nach Anspruch 2, bei welchem:
die ersten Anordnungsmittel (6) erste hervorstehende Stifte des ersten Elements (4) aufweisen.

4. Werkstückhalter nach einem der Ansprüche 1 bis 3, bei welchem:
die ersten Stifte einfahrbar sind zwischen einer ersten, sogenannten zurückgezogenen Position, bei welcher sie nicht über die erste Fläche hinausragen, und einer zweiten, sogenannten hervorstehenden Position, bei welcher sie von dem ersten Element (4) hervorstehen.

5. Werkstückhalter nach einem der Ansprüche 1 bis 4, bei welchem die ersten Stifte Mittel zum Festklemmen des nutzbaren Teils (2) an dem ersten Element (4) des Werkstückhalters (7) aufweisen.

6. Verfahren zum Herstellen eines gewünschten Stücks (Werkstück) von einem Rohling (1), wobei der Rohling einen nutzbaren Teil (2) aufweist, welcher der Teil des Rohlings ist, der maschinell bearbeitet und dann ausgeschnitten werden soll, um das gewünschte Stück bereitzustellen, und einen verbleibenden Teil (16) aufweist, welcher der Teil des Rohlings ist, der nicht Teil des gewünschten Stücks ist, wobei das Verfahren unter der Steuerung einer Steuerungs-Software in einer Werkzeugmaschine durchgeführt wird,
die Werkzeugmaschine einen Werkstückhalter (7) aufweist,
das Verfahren einen ersten Schritt zum Positionieren des Rohlings (1) auf dem Werkstückhalter (7) aufweist,
einen zweiten Schritt zum Festklemmen des Rohlings (1) in einer Position auf dem Werkstückhalter (7) aufweist,
einen dritten Schritt zum maschinellen Bearbeiten des nutzbaren Teils (2) des Rohlings (1) aufweist,
wobei das Festklemmen des zweiten Schritts ein Festklemmen des verbleibenden Teils (16) an dem zweiten Element (3) des Werkstückhalters (7) ist,
wobei der dritte Schritt ein derartiges partielles Ausschneiden des nutzbaren Teils aus dem Rohling (1) ist, dass der nutzbare Teil und der verbleibende Teil (16) nur über nicht ausgeschnittene Bereiche (15), sogenannte "Brücken", des Rohlings (1) befestigt sind,
wobei das Verfahren ausserdem aufweist:
einen vierten Schritt zum Festklemmen des nutzbaren Teils an dem ersten Element (4),
einen fünften Schritt zum Entfernen bzw. Beseitigen der "Brücken" und somit zur Trennung des nutzbaren Teils und des verbleibenden Teils,
einen sechsten Schritt zum Entfernen des verbleibenden Teils (16) von dem Werkstückhalter (7),
wobei das Verfahren **dadurch gekennzeichnet ist, dass**:
der Werkstückhalter (7) ein erstes Element (4) aufweist, um den nutzbaren Teil des Rohlings (1) zu halten, und ein zweites Element (3) aufweist, um den verbleibenden Teil (16) des Rohlings (1) zu halten, wobei das erste und das zweite Element (4 und 3) entlang der Drehachse und unter der Steuerung der Steuerungs-Software in Bezug zueinander verschoben werden können,
und dass das Verfahren einen siebten Schritt zum derartigen Verschieben des ersten Elements (4) des Werkstück-Halters (7) aufweist, dass der nutzbare Teil des Rohlings sich von dem zweiten Element (3) entfernt, und
einen achten Schritt zur maschinellen Nachbehandlung des nutzbaren Teils aufweist.

7. Herstellungsverfahren nach Anspruch 6, bei welchem das erste Element (4) und der nutzbare Teil (2) des Rohlings (1) komplementäre Anordnungsmittel (6, 9) aufweisen.

8. Herstellungsverfahren nach Anspruch 7, bei welchem die komplementären Anordnungsmittel des ersten Elements (4) Positionierstifte aufweisen, welche verschiebbar sind zwischen einer in das erste Element (4) zurückgezogenen ersten Stellung und einer aus dem ersten Element (4) hervorstehenden zweiten Stellung,
und bei welchem die komplementären Anordnungsmittel des nutzbaren Teils (2) des Rohlings (1) Lochungen und/oder Aussparungen aufweisen, um eine genaue Positionierung des nutzbaren Teils auf dem ersten Element zu ermöglichen, wenn die Stifte von dem ersten Element hervorstehen.

9. Herstellungsverfahrung nach Anspruch 8, bei welchem der vierte Schritt eine derartige Verschiebung der Stifte zwischen der zurückgezogenen Stellung und der hervorstehenden Stellung aufweist, dass der nutzbare Teil von dem fünften bis zu dem achten Schritt in einer Position gehalten werden kann.

10. Herstellungsverfahren nach Anspruch 6, bei welchem der achte Schritt eine maschinelle Bearbeitung der Kanten des ersten Teils aufweist, um jegliche Rauhigkeiten (15) zu beseitigen, die während des dritten und/oder fünften Schrittes erzeugt wurden.
